# EUROPÄISCHE PATENTANMELDUNG

(11) **EP 1 939 520 A1**
(43) Veröffentlichungstag der Anmeldung: **02.07.2008**
(21) Anmeldenummer: 07122671.6
(22) Anmeldetag: 07.12.2007
(51) Int. Cl.: F16N 7/38, B65G 45/08

(54) **System und Verfahren zum Schmieren einer Transporteinrichtung**

(30) Priorität: 18.12.2006 EP 06126312
(71) Anmelder: INVENTIO AG, 6052 Hergiswil (CH)
(72) Erfinder: Schütz, Richard, 1100, Wien (AT); Trojek, Günter, 2440, Moosbrunn (AT); Matheisl, Michael, 2331, Vösendorf (AT)
(74) Vertreter: Blöchle, Hans

(57) **Zusammenfassung**

Ein Schmiersystem (10) für eine Transporteinrichtung, insbesondere eine Fahrtreppe bzw. ein Fahrsteig, umfasst eine Kolbenpumpe (2) zur Abgabe einer vorgegebenen Schmiermittelmenge pro Arbeitstakt, eine Schmierstellenanordnung mit wenigstens einer Schmierstelle (5.1,5.2,5.3,5.4,5.5) und eine verzweigte Schmiermittelleitung (4), wobei je ein Zweig bzw. eine Zuleitung (4.1, 4.2, 4.3, 4.4, 4.5) der Schmiermittelleitung (4) die Pumpe (2) parallel mit einer Schmierstelle (5.1, 5.2) der Schmierstellenanordnung verbindet. Durch eine Ventilanordnung (3) kann jeder Zweig bzw. jede Zuleitung (4.1, 4.2, 4.3, 4.4, 4.5) der Schmiermittelleitung (4) wahlweise und einzeln gesperrt oder mit der Kolbenpumpe (2) verbunden werden.

## Beschreibung

Die vorliegende Erfindung betrifft ein System und ein Verfahren zum Schmieren einer Transporteinrichtung, insbesondere einer Fahrtreppe oder eines Fahrsteiges.

Eine Fahrtreppe umfasst eine Mehrzahl von Stufen, die durch eine oder mehrere umlaufende Stufenketten miteinander verbunden sind. Außerdem sind diese Stufen im Förderbereich vertikal gegeneinander versetzt und ermöglichen so eine Vertikalbeförderung. Ein Fahrsteig umfasst eine Mehrzahl von miteinander durch eine oder mehrere umlaufende Palettenketten verbundenen Paletten zur Horizontalbeförderung von Personen und/oder Leichtwaren. Bei beiden Transporteinrichtungen können Handläufe vorgesehen sein, die dann über Handlaufketten angetrieben werden. Stufenketten bzw. Palettenketten und Handlaufketten können über eine oder mehrere Antriebsketten, insbesondere eine oder mehrere Hauptantriebsketten mit einer oder mehreren Antriebseinheiten, insbesondere elektromotorisch angetriebenen Zahnrädern, gekoppelt sein. Aufgrund unterschiedlicher Personenlasten und Umlauflängen weisen dabei die einzelnen Ketten in der Regel unterschiedliche Abmessungen, insbesondere Gliederanzahl und Kettengelenkgröße, und Umlaufgeschwindigkeiten bzw. Ablaufgeschwindigkeiten auf.

Um die im Betrieb der Transporteinrichtung auftretende Reibung zwischen den Stufen und ihren Führungen sowie in den Ketten zu verringern und so die erforderliche Antriebsleistung zu mindern und die Lebensdauer der Transporteinrichtung zu erhöhen, sollen Gleit- und/oder Gelenkflächen der Stufenketten und/oder die verschiedenen anderen Ketten in regelmäßigen Abständen mit einem Schmiermittel, welches bevorzugt Schmieröl und/oder reibungsmindernde Additive umfasst, geschmiert werden. Um dabei den Wartungsaufwand zu verringern, soll eine solche Schmierung automatisch durch ein zentrales, kompaktes und komprimiertes Schmiersystem durchgeführt werden, welches vorteilhafterweise ein zentrales Nachfüllen von Schmiermittel, eine zentrale Ansteuerung und eine zentrale Kontrolle ermöglicht. Dabei erfordert, beispielsweise aufgrund der unterschiedlichen Abmessungen und Umlaufgeschwindigkeiten der verschiedenen Ketten, deren Schmierung die Abgabe unterschiedlicher Schmiermittelmengen an den verschiedenen, den jeweiligen Ketten zugeordneten Schmierstellen.

Hierzu schlägt die DE 198 47 776 A1 eine Dreh-Hub-Kolbenpumpe mit einer Mehrzahl miteinander gekoppelter Kolben vor, von denen jeder Kolben mit einer Schmierstelle kommuniziert. Durch Änderung einer Steuerkontur der einzelnen Kolben kann deren Fördermenge individuell eingestellt werden. Nach der DE 198 47 776 A1 ist aus der Praxis auch ein Schmiersystem nach dem Oberbegriff des Anspruchs 1 bekannt, bei dem eine elektromagnetisch betätigte Mehrleitungspumpe bei jedem elektronischen Steuerimpuls eine vorgegebene Schmiermittelmenge in parallel geschaltete Schmiermittelleitungen abgibt, wobei ein Progressivverteiler zur Aufteilung der Schmiermittelmenge auf die einzelnen Leitungsstränge nachgeschaltet sein kann. Hieran kritisiert die DE 198 47 776 A1, dass die Schmiermittelabgabemengen nicht individuell und mit hoher Reproduzierbarkeit genau einstellbar seien. Daraus ergibt sich eine Mangelschmierung der Fahrtreppe, die einen schnellen Kettenverschleiß verursacht bzw. auslöst.

Die mechanische Einstellung der den einzelnen Schmierstellen zugeförderten individuellen Schmiermittelmengen durch Änderung der Steuerkontur, wie sie die DE 198 47 776 A1 vorschlägt, ist aufwändig und ermöglicht nur eine begrenzte Schmiergenauigkeit und Schmiermitteldosierbarkeit. Zudem ist es beispielsweise in der Regel nicht möglich, die einzelnen Schmierstellen sukzessive bzw. aufeinanderfolgend bzw. schrittweise bzw. stufenweise zu beschicken, da stets alle Kolben bei einem Betrieb der Dreh-Hub-Kolbenpumpe zwangsgekoppelt und gleichzeitig arbeiten. Schließlich ist der Aufbau der Dreh-Hub-Kolbenpumpe mit mehreren, auf einer Welle laufenden Kolben aufwändig. Da eine der Schmierstellenanzahl entsprechende Menge an abzudichtenden und gleitgelagerten, mehreren Kolben sowie eine entsprechende Anzahl an mehreren Zuleitungen und Abdichtungen an den Saugseiten dieser vielen Kolben voraussetzt. Zudem steigert die Anzahl der vielen arbeitenden Kolben mit der damit verbundenen Reibung die benötigte elektrische Antriebsleistung und kann unerwünschte Vibrationen in das Gesamtsystem einbringen.

Aufgabe der vorliegenden Erfindung ist es daher, eine Schmierung für eine Fahrtreppe oder einen Fahrsteig bzw. eine Transporteinrichtung zur Verfügung zu stellen, bei der einzelne Schmierstellen präzise und individuell mit unterschiedlichen Schmiermittelmengen versorgt werden können.

Zur Lösung dieser Aufgabe ist ein Schmiersystem nach dem Oberbegriff des Anspruchs 1 durch dessen kennzeichnende Merkmale weitergebildet. Anspruch 12 stellt das entsprechende Verfahren unter Schutz.

Erfindungsgemäß umfasst ein Schmiersystem für eine Transporteinrichtung, insbesondere eine Fahrtreppe oder einen Fahrsteig, eine Pumpe zur Abgabe einer vorgegebenen Schmiermittelmenge pro Arbeitstakt sowie eine Schmierstellenanordnung mit einer oder mehreren Schmierstellen. Eine Schmiermittelleitung verzweigt sich in parallele Zweige, wobei je ein Zweig die Pumpe mit einer Schmierstelle der Schmierstellenanordnung verbindet. Die Schmiermittelleitung bzw. einzelne Zweige können dabei vorteilhaft Fluidleitungen, insbesondere flexible Kunststoffrohre, und/oder Fluidpassagen beispielsweise in Bauteilen der Transporteinrichtung umfassen.

Die Pumpe ist in der vorliegenden Erfindung als Kolbenpumpe, bevorzugterweise als eine elektromagnetisch betätigte Kolbenpumpe ausgebildet. Hierdurch ist es, insbesondere im Unterschied zu bekannten Flügelzellen- oder Zahnradpumpen, möglich, die in die Schmiermittelleitung geförderte Schmiermittelmenge sehr genau und exakt zu dosieren. Sie ergibt sich aus dem Produkt aus Hub, Kolbengrundfläche und Anzahl der Arbeitstakte. In einer vorteilhaften Ausführung beträgt das vom Kolben bei einem Hub verdrängte Schmiermittelvolumen 30 bis 120 mm³, bevorzugt 50 bis 90 mm³ und besonders bevorzugt im Wesentlichen gleich 60 mm³. Die Taktzeit kann dabei im Wesentlichen 1 Arbeitshub pro Sekunde betragen. Vorteilhafterweise beträgt der zeitliche Abstand zwischen zwei Arbeitshüben 0,5 bis 5 Sekunden, um ausreichend Schmiermittel zu fördern und zu den Schmierstellen zu transportieren. Somit kann die zu den Schmierstellen geförderte Schmiermittelmenge durch Vorgabe der Arbeitstakte sehr genau und exakt dosiert und in weiten Einsatz- bzw. Verwendungsbereichen einfach variiert werden.

Das Schmiersystem umfasst erfindungsgemäß eine Ventilanordnung, mit der jeder Zweig der Schmiermittelleitung wahlweise gesperrt oder mit der Pumpe verbunden, d.h. geöffnet werden kann. In einer besonders bevorzugten Ausführung ist hierzu zwischen der Kolbenpumpe und jeder Schmierstelle der Schmierstellenanordnung je ein steuerbares Ventil bzw. Elektroventil, insbesondere ein elektromagnetisch betätigtes Ventil, der Ventilanordnung in dem Zweig der Schmiermittelleitung angeordnet, der die Pumpe und die jeweilige Schmierstelle verbindet. Hierdurch wird die gezielte Beschickung der einzelnen Schmierstellen mit einer präzise vorgebbaren Schmiermittelmenge möglich. Wenn eines dieser Ventile geöffnet ist, fördert die Kolbenpumpe eine durch die Taktzahl genau vorgebbare Menge an Schmiermittel zu der zugeordneten Schmierstelle. Andere bzw. zusätzliche Schmierstellen, deren zugeordnete Ventile geschlossen sind, werden hingegen nicht mit Schmiermittel beschickt.

In einer alternativen Ausführung kann die Ventilanordnung auch ein Umschaltventil, insbesondere ein elektromotorisch betriebenes Umschaltventil, umfassen, welches wahlweise einen Zweig bzw. eine Zuleitung öffnet, während die anderen Zweige bzw. die anderen Zuleitungen geschlossen sind. Hierzu kann beispielsweise in einem Dreh- oder Schiebe-Umschaltventil ein Verstellglied so bewegt werden, dass jeweils ein unterschiedlicher Zweig mit der Druckseite der Pumpe verbunden wird. Hierdurch kann dieselbe Funktionalität realisiert werden.

Prinzipiell können mehrere Zweig bzw. Zuleitungen, die die Pumpe mit den Schmierstellen verbinden, gleichzeitig geöffnet sein, während die Pumpe Schmiermittel fördert. Dann verteilt sich die gesamte geförderte Schmiermittelmenge entsprechende der Strömungswiderstände in den einzelnen Zuleitungen auf die jeweiligen Schmierstellen, in einem unterschiedlichen Verhältnis. Besonders bevorzugt wird jedoch stets nur höchstens ein Zweig bzw. eine Zuleitung geöffnet, so dass die zu diesem geförderte Schmiermittelmenge durch die Anzahl der Arbeitstakte der Pumpe sehr genau und exakt vorgegeben werden kann.

Damit ist es erfindungsgemäß möglich, mit relativ geringem konstruktiven Aufwand einzelne Schmierstellen individuell mit unterschiedlichen Schmiermittelmengen zu versorgen. Durch die Ventilanordnung ist die gezielte Beschickung ausgewählter Schmierstellen möglich. Die Kolbenpumpe gestattet somit die Förderung von exakt vorgebbaren Schmiermittelmengen zu den vorgegebenen Schmierstellen. Die Schmiermittelmenge kann dabei durch Änderung der Taktzahl einfach, beispielsweise durch eine entsprechende Ansteuerung der Pumpe, verändert werden. Hierzu kann beispielsweise eine Steuerung der Transporteinrichtung die an den jeweiligen Schmierstellen benötigte Schmiermittelmenge, die von der Fahrgeschwindigkeit, den Betriebsbedingungen (Sommer/Winter; Innen-/Außenbetrieb; Verkehrs- oder Personentransport und Benutzerfrequenz und dergleichen) abhängen kann, an eine Steuereinrichtung des Schmiersystems übermitteln. Die Steuerung bzw. die Steuereinrichtung des Schmiersystems verändert dann die Taktzahl der Pumpe dementsprechend.

Bevorzugterweise können dabei die einzelnen Schmierstellen sukzessive nacheinander mit Schmiermittel versorgt werden, wobei vorteilhafterweise die Reihenfolge durch Änderung der Ansteuerung der Ventilanordnung einfach verändert werden kann. Insbesondere können beispielsweise einzelne Schmierstellen auch gezielt ausgelassen werden, was besonders vorteilhaft die Schmierung nur einzelner Ketten, Stufengleitflächen bzw. Stufenachsen oder anderer beweglicher Teile oder Gleitflächen ermöglicht, wenn diese nach einem Austausch bzw. bei einer Erstschmierung erstmals geschmiert werden sollen. Auch ist die Schmiermittelmenge einzelner Schmierstellen relativ zueinander, durch den Wartungsmann bzw. Wartungsmonteur, veränderbar, indem die Taktzahlen der Pumpe bezüglich der Schmierstellen entsprechend verändert werden, wenn beispielsweise eine Handlaufkette aufgrund sich ändernder Betriebsbedingungen bei jedem neuen Schmierintervall stärker geschmiert werden muss.

Gleichermaßen kann ein erfindungsgemäßes Schmiersystem beispielsweise durch Stillsetzten von Ventilen bzw. Ersetzen bzw. Absetzen einzelner Ventile durch Leitungszuschlüsse und/oder durch Änderung der Pumpensteuerung, insbesondere der Taktzahlen für die einzelnen Schmierstellen, einfach an verschiedene Transporteinrichtungen adaptiert werden. Somit wird erfindungsgemäß ein universell und flexibel einsetzbares Schmiersystem zur Verfügung gestellt.

Ist beispielsweise in einer Grundausführung eine Ventilanordnung mit fünf bzw. sieben steuerbaren Ventilen vorgesehen, von denen je eines einer linken bzw. rechten Stufenkette, einer linken bzw. rechten Antriebskette, einer Handlaufantriebskette bzw. einer linken bzw. rechten Handlaufkette zugeordnet ist, kann dieses Schmiersystem durch Ersetzen eines Ventils für eine Stufen-, eine Antriebs- und eine Handlaufkette durch einen Blindanschluss leicht auf eine Transporteinrichtung mit keiner Schmierung für die Stufen-, Antriebs- und Handlaufkette umgerüstet werden. Gleichermaßen können beispielsweise nur die Ventile für die Handlaufketten blindgeschaltet werden bzw. entfallen. In der Steuerung der Pumpe wird dann die Anzahl der Arbeitstakte für die blindgeschalteten Zweige bzw. Zuleitungen auf Null gesetzt bzw. zurückgesetzt.

Ebenso kann durch Erhöhung der Taktzahl der Pumpe die Grundausführung des Schmiersystems beispielsweise an eine Fahrtreppe bzw. an einen Fahrsteig bzw. an eine Transporteinrichtung mit größer Förderhöhe, höherer Umlaufgeschwindigkeit oder größeren Ketten bzw. Kettenflächenpressungen angepasst werden.

In einer bevorzugten Ausführung werden die elektromagnetisch betätigte Kolbenpumpe und die elektromagnetisch betätigten Ventile bzw. das elektromotorisch betätigte Umschaltventil der Ventilanordnung mit der gleichen Spannung, bevorzugt mit 12V oder/bis 24V oder 110V Gleich- oder Wechselspannung versorgt. Damit benötigt das gesamte Schmiersystem nur eine einheitliche Spannung und kann daher sehr universell und weltweit eingesetzt werden. Eine geringe Spannung erfordert vorteilhaft keine Verrohrung der elektrischen Leitungen und kann so den Bauteil- und Zusammenbauaufwand weiter verringern.

Die Kolbenpumpe, die aufgrund der individuell gesteuerten Ventilanordnung jeweils nur ausgewählte Schmierstellen beschickt, erhöht die Schmiergenauigkeit und die Schmiermitteldosierbarkeit des Schmiersystems. Damit kann einerseits eine Mangelschmierung und andererseits eine Überschmierung verhindert werden, die zu einer Beschädigung oder einer Verschmutzung der Transporteinrichtung führen würde. Insgesamt kann damit auch die eingesetzte Schmiermittelmenge verringert werden, was die ökologische Belastung der Umwelt durch das verbrauchte Schmiermittel, aber auch den Bauraum des Schmiersystems vorteilhaft verringern kann.

Bevorzugt sind die Kolbenpumpe und die Ventilanordnung in einem gemeinsamen Gehäuse bzw. Einhausung oder Montagetragblech bzw. Einbaublech aufgenommen, das vorteilhaft spritz- oder allwettergekapselt und/oder schlagfest ausgebildet sein kann. Dies ermöglicht es, das solcherart vormontierte Schmiersystem universell und flexibel für verschiedene Transporteinrichtungen zu verwenden. Vor Ort muss lediglich das Gehäuse bzw. die Einhausung oder das Montagetragblech bzw. das Einbaublech mit der darin vormontierte Pumpe und den darin vormontierten Ventilen beispielsweise an einem Fachwerk der Transporteinrichtung befestigt, zum Beispiel : angeschweißt oder angeschraubt oder angeklipst werden. Anschließend sind lediglich noch die Ventilausgänge mit den einzelnen Schmierstellen und die Pumpen-Ventilanordnung mit einer Energiequelle zu verbinden. Vorteilhafterweise ist hierzu wenigstens ein Teil einer Steuereinheit für die Pumpe ebenfalls in dem Gehäuse angeordnet bzw. untergebracht.

Die Steuerung kann dabei autonom erfolgen, wobei die Schmiermittelmengen für die einzelnen Schmierstellen an der Steuereinheit selbst einstellbar sind und eine Schmierung direkt an der Steuereinheit initiiert bzw. gestartet wird. Gleichermaßen kann die Steuereinheit auch mit einer Steuerung der Transporteinrichtung verbunden werden und von dieser die erforderlichen Schmiermittelmengen und den Befehl zum Beginn einer Schmierung erhalten.

In einer vorteilhaften Ausführung ist eine Schmierstelle einer Stufenkette, einer Antriebskette und/oder einer Handlaufantriebskette der Transporteinrichtung zugeordnet. Diese verschiedenen Ketten bedürfen regelmäßiger Schmierung. Zudem ist hier aufgrund des unterschiedlichen Schmiermittelbedarfs eine individuelle Beschickung mit unterschiedlichen Schmiermittelmengen besonders vorteilhaft. Gleichermaßen können jedoch andere Schmierstellen auch anderen Gleitflächen oder bewegten Teilen zugeordnet sein. So kann ein erfindungsgemäßes Schmiersystem beispielsweise auch mit einem Schmiersystem zur Schmierung der Gleitflächen von Stufen einer Fahrtreppe kombiniert werden, wie es aus der US 6,471,033 B2 bekannt ist, auf deren Inhalt diesbezüglich vollinhaltlich Bezug genommen wird.

Eine oder mehrere Schmierstellen der Schmierstellenanordnung können jeweils einen oder mehrere Schmierpinsel und/oder Schmieröffnungen umfassen. Da durch dass erfindungsgemäße Schmiersystem unterschiedliche Schmierstellen mit unterschiedlichen, genau vorgebbaren Schmiermittelmengen beschickt werden. Vorteilhafterweise können unterschiedliche Schmierstellen auch eine unterschiedliche Anzahl von Schmierpinseln bzw. Schmieröffnungen aufweisen. So können beispielsweise zwei Schmierstellen mit je zwei Schmieröffnungen für eine linke und eine rechte Stufenkette bzw. Palettenkette, zwei Schmierstellen mit je drei Schmieröffnungen für eine linke und eine rechte Antriebskette und eine Schmierstelle mit zwei Schmieröffnungen für eine Handlaufantriebskette vorgesehen sein. Zusätzlich können noch zwei Schmierstellen mit je zwei Schmieröffnungen für eine linke und eine rechte Handlaufkette vorgesehen sein. Insgesamt können vorteilhafterweise 4 bis 7 Schmierstellen, bevorzugt 4 bis 5 Schmierstellen vorgesehen sein.

Die Pumpe kann das Schmiermittel einem Vorrat entnehmen und überschüssiges Schmiermittel in einen Auffangbehälter entsorgen. In einer bevorzugten Ausführung umfasst das Schmiersystem jedoch eine Rundleitung, indem ein Zweig bzw. eine Zuleitung der Schmiermittelleitung mit einer Saugseite der Pumpe kommuniziert, so dass Schmiermittel, welches von der Pumpe in die Schmiermittelleitung gefördert wird, von dort jedoch aufgrund geschlossener Ventile oder Strömungswiderstände in einzelnen Zweigen bzw. Zuleitungen nicht zu den Schmierstellen gelangt, wieder dem Schmiermittelvorrat zugeführt wird, aus welchem die Pumpe fördert. Dies kann einerseits eine Dichtigkeitskontrolle bzw. Dichtheitskontrolle des Schmiersystems ermöglichen, wie sie nachfolgend näher beschrieben wird. Zudem kann, beispielsweise bei der Erstschmierung, Schmiermittel wieder verwendet werden, welches zur Entlüftung des Systems eingebracht wird. Dies entlastet die Umwelt.

Ein Schmiersystem kann ein Schmiermittelreservoir umfassen, das in Förderrichtung der Pumpe zwischen der Ventilanordnung und der Pumpe angeordnet ist, so dass die Pumpe Schmiermittel aus dem Reservoir zu der Ventilanordnung fördert. Das Reservoir ist bevorzugt von außen befiillbar. In einer vorteilhaften Ausführung ist das Reservoir zusammen mit der Pumpen-Ventilanordnung in dem Gehäuse bzw. in der Einhausung oder an dem Montagetragblech bzw. Einbaublech aufgenommen, was die notwendigen Zusammenbauschritte bzw. Montageschritte vor Ort, insbesondere die Verbindung der Pumpe mit dem Reservoir, verringert. Um das Schmiersystem an unterschiedliche Transporteinrichtungen anpassen zu können, können verschiedene Reservoirs unterschiedlichen Fassungsvermögens vorgesehen sein, die bevorzugt austauschbar in dem Gehäuse bzw. in der Einhausung oder an dem Montagetragblech bzw. Einbaublech angeordnet sind.

In dem Schmiermittelreservoir kann eine Entlüftung und/oder ein Feuchtigkeitsabscheidung ausgebildet sein, um im Schmiermittel eingeschlossene Luft, insbesondere während der Erstschmierung, bzw. sich im Schmiermittel ansammelnde Feuchtigkeit, die beispielsweise durch Schmieröffnungen in das System eindringen kann, zu entfernen.

In einer bevorzugten Ausführung der vorliegenden Erfindung ist eine Druckmessvorrichtung, beispielsweise ein Druckschalter, in der Schmiermittelleitung angeordnet. Dies ermöglicht, wie nachfolgend beschrieben wird, eine Dichtheitsprüfung des Systems bzw. eine Funktionsüberprüfung der einzelnen Ventile bzw. der Ventilanordnung. Zudem können Fehlfunktionen, insbesondere ein unzulässiger hoher Schmiermitteldruck frühzeitig erkannt werden. Im Falle einer solchen Fehlfunktion kann die Pumpe ausgeschaltet und/oder können die Ventile, bzw. die Ventilanordnung geöffnet werden, um eine Beschädigung der Komponenten bzw. Bauteile, insbesondere der Pumpe oder der Ventile zu verhindern.

Um eine Überlastung der Schmiermittelleitung, der Pumpe bzw. der Ventile zu verhindern, kann auch ein Druckminderventil bzw. Druckminderungsventil in der Schmiermittelleitung vorgesehen sein, welches ab einem bestimmten Grenzdruck bzw. Systemüberdruck öffnet und dann ein Abströmen des Schmiermittels aus der Schmiermittelleitung in das Reservoir ermöglicht.

In der Schmiermittelleitung und/oder dem Schmiermittelreservoir kann eine Heiz- und/oder Kühlvorrichtung zusätzlich angeordnet sein. Diese kann beispielsweise in Form von Heizoder/und Kühlschlangen ausgebildet sein, die von dem Schmiermittel umströmt und von einem mittels einer elektrischen Heizeinrichtung vorgeheizten oder in einem Wärmetauscher oder einer Klimaanlage gekühlten Wärmeträger bzw. Kühlmittel durchströmt werden. Somit kann beispielsweise bei kühlen Betriebsbedingungen, wie sie im Winter bei Außenfahrtreppen oder -fahrsteigen vorliegen, das Schmiermittel vor einer Schmierung aufgewärmt und so seine Viskosität und Schmierfähigkeit verbessert werden. Gleichermaßen kann in heißen Klimazonen bzw. im Sommer das Schmiermittel vorgekühlt werden, bevor es, zu heiß, zur Schmierung eingesetzt wird. Dies kühlt vorteilhaft auch die geschmierten Komponenten, insbesondere bzw. vornehmlich die Kolbenpumpe.

Bei einer Schmierung wird für jede Schmierstelle der Schmierstellenanordnung, an der geschmiert werden soll, zunächst der entsprechende Zweig bzw. die entsprechende Zuleitung der Schmiermittelleitung zwischen der Pumpe und der Schmierstelle durch die Ventilanordnung geöffnet, indem beispielsweise das zugeordnete steuerbare Ventil der Ventilanordnung in dem Zweig bzw. in der Zuleitung der Schmiermittelleitung zwischen der Pumpe und der Schmierstelle geöffnet wird. Anschließend wird die Pumpe mit einer vorgegebenen Zahl von Arbeitstakten betrieben, so dass sie eine definierte Schmiermittelmenge in den Zweig bzw. in die Zuleitung der Schmiermittelleitung und zu der Schmierstelle fördert, wo diese aus den Schmieröffnungen oder Schmierpinseln der Schmierstelle austritt und eine vorbeilaufende Kette, eine Gleitfläche oder dergleichen schmiert. Anschließend wird der Zweig bzw. die Zuleitung durch die Ventilanordnung geschlossen, beispielsweise, indem das steuerbare Ventil in dem Zweig bzw. in der Zuleitung geschlossen wird.

Bevorzugt werden dabei alle Schmierstellen, an denen bei dieser Schmierung geschmiert werden soll, sukzessive nacheinander auf die vorstehend beschriebene Weise abgearbeitet, so dass jeweils nur höchstens einem Zweig bzw. einer Zuleitung und der zugeordneten Schmierstelle eine durch die Anzahl der ausgeführten Arbeitstakte der Kolbenpumpe genau definierte Schmiermittelmenge zugeführt wird.

Eine Schmierung wird vorteilhafterweise in regelmäßigen Intervallen und/oder je nach Bedarf durchgeführt. Sofern an unterschiedlichen Schmierstellen unterschiedliche Schmierperioden zweckmäßig sind, da beispielsweise manche Ketten bzw. Förderketten mehr Schmiermittel aufnehmen und deshalb seltener geschmiert werden, müssen bei einer Schmierung nicht stets alle Ventile der Ventilanordnung geöffnet werden. So kann beispielsweise bei Ersatz einer Kette anschließend nur das zugehörige Ventil geöffnet werden, um eine Erstschmierung dieser Kette mit Schmiermittel durchzuführen.

Vorteilhafterweise wird die Transporteinrichtung während einer Schmierung betrieben, so dass die zu schmierenden Komponenten, insbesondere Ketten oder Gleitflächen an den Schmieröffnungen oder Schmierpinseln der jeweiligen Schmierstelle vorbeistreifen, dort austretendes Schmiermittels aufnehmen und weiter, in die Transporteinrichtung, tragen. Die aufgegeben Schmiermittelmenge kann auch von der Geschwindigkeit der zu schmierenden Komponenten abhängen - je schneller diese an den Schmierstellen vorbeistreifen, desto mehr Schmiermittel pro Zeit muss von der Pumpe zur Verfügung gestellt werden. Umgekehrt wird vorteilhafterweise bei einer sogenannten Schleichfahrt nicht geschmiert oder nur halb so viel. Zudem kann eine Nachlaufzeit der Transporteinrichtung nach einer Schmierung vorgesehen sein, um ein Eindringen und Verteilen des Schmiermittels zu gewährleisten. Diese Nachlaufzeit beträgt bevorzugt 15 Minuten bis 30 Minuten oder 45 Minuten.

Vor der erstmaligen oder einer Wieder-Inbetriebnahme der Fahrtreppe bzw. des Fahrsteiges bzw. der Transporteinrichtung kann eine Erstschmierung programmgemäß durchgeführt werden. Hierzu wird zunächst bei geschlossener Ventilanordnung die Pumpe solange betrieben, bis die Druckmesseinrichtung einen ausreichenden Druck erfasst, das Druckminderventil in der Schmiermittelleitung öffnet und Schmiermittel blasenfrei gefördert wird, was beispielsweise optisch an einer durchsichtigen Stelle in der Schmiermittelleitung geprüft werden kann. Anschließend werden sukzessive die einzelnen Zweig bzw. die einzelnen Zuleitungen durch die Ventilanordnung geöffnet, wobei die Pumpe für eine vorgegebene Anzahl von Arbeitstakten oder bis an den einzelnen Schmierstellen luftfrei Schmiermittel austritt, weiterbetrieben wird.

Vor einer Schmierung wird bevorzugt die Füllhöhe im Reservoir geprüft. Hierzu kann beispielsweise ein Schwimmerschalter die vorhandene Menge an Schmiermittel erfassen. Nur, falls ausreichend Schmiermittel vorhanden ist, wird eine Schmierung durchgeführt, während andernfalls beispielsweise eine Warnung ausgegeben und ein Betrieb der Pumpe unterbunden wird. Hierdurch kann ein Leerlaufen bzw. ein Leerhub der Pumpe vermieden werden.

Vorteilhafterweise kann vor dem Öffnen des ersten Zweiges bzw. der ersten Zuleitung durch die Ventilanordnung geprüft werden, ob ein ausreichender Druckaufbau erfolgt. Hierzu werden zunächst alle Ventile bzw. Ausgänge der Ventilanordnung geschlossen und anschließend die Pumpe mit einer vorgegebenen Zahl von Arbeitstakten betrieben. Dabei wird mittels der Druckmessvorrichtung geprüft, ob der Druck in der Schmiermittelleitung ansteigt. Nur, falls der Druck entsprechend der Taktzahl der Pumpe ansteigt, wird eine Schmierung durchgeführt, während andernfalls beispielsweise eine entsprechende Warnung ausgegeben und das Schmiersystem stillgesetzt wird, da entweder die Pumpe defekt oder das Schmiersystem undicht bzw. leckt, oder ein Ventil nicht vollständig schließt. Erfolgt ein ausreichender Druckaufbau, können ein oder mehrere Zweige bzw. Zuleitungen durch die Ventilanordnung geöffnet werden. Und den Schmierungszyklus in Gang setzen.

In einer bevorzugten Ausführung wird für jede Schmierstelle der Schmierstellenanordnung, bei der eine Schmierung stattfindet, eine ordnungsgemäße Funktion des zugeordneten Ventils überprüft. Hierzu wird durch die Druckmesseinrichtung erfasst, ob nach dem Öffnen des entsprechenden Zweiges bzw. der entsprechenden Zuleitung zwischen der Pumpe und der Schmierstelle durch die Ventilanordnung der Druck in der Schmiermittelleitung der Pumpe ansteigt. Steigt der Druck an, so hat das Ventil nicht geöffnet und eine entsprechende Fehlermeldung kann ausgegeben werden, sowie der Zweig bzw. die Zuleitung oder das komplette Schmiersystem stillgesetzt werden.

Weitere Vorteile, Aufgaben und Merkmale ergeben sich aus den Unteransprüchen und den bevorzugten Ausführungsbeispielen. Hierzu zeigt:
Fig. 1 in schematisierter Form ein Schmiersystem nach einer ersten Ausführung der vorliegenden Erfindung; und
Fig. 2 in schematisierter Form ein Schmiersystem nach einer zweiten Ausführung der vorliegenden Erfindung.

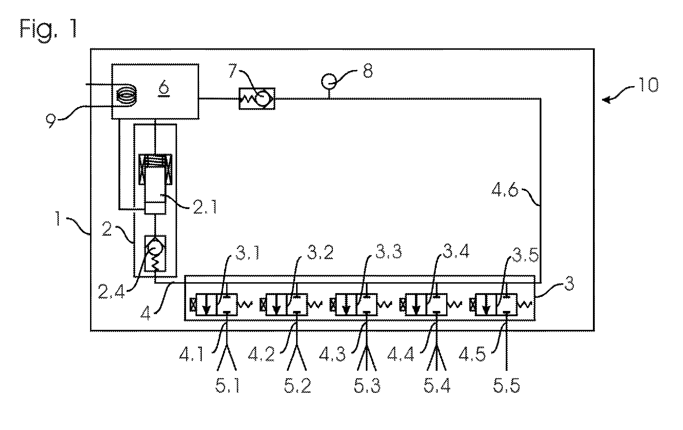

Ein Schmiersystem nach einer ersten Ausführung der vorliegenden Erfindung ist in Fig. 1 dargestellt und umfasst ein Gehäuse 1 bzw. eine Einhausung oder ein Montagetragblech bzw. ein Einbaublech, in dem eine elektromagnetisch betriebene Kolbenpumpe 2 aufgenommen ist. Diese umfasst einen beweglichen Kolben 2.1, der von einem Elektromagneten gegen die Kraft einer Druckfeder geschoben wird. Gegen den Kolben 2.1 ist ein federbeaufschlagtes Rückschlagventil 2.4 angeordnet. Der Kolben 2.1 drückt bzw. presst das Schmiermittel, bei dem es sich im Ausführungsbeispiel um Schmieröl bzw. synthetisches Öl handelt, von einer Saug- zu einer Druckseite der Pumpe 2. Das federbeaufschlagte Rückschlagventil 2.4 ermöglicht ein genaues bzw. exaktes Dosieren des Schmiermittels. Außerdem wird durch das federbeaufschlagte Rückschlagventil 2.4 ein Rückströmen des Schmiermittels aus der Schmiermittelleitung 4 verhindert. Das genaue und exakte Dosieren wird durch den Kolbenhub entgegen dem federbeaufschlagten Rückschlagventil 2.4 gewährleistet bzw. sichergestellt. Das Druckniveau wird durch die Feder des federbeaufschlagten Rückschlagventils 2.4 gehalten und ermöglicht einen konstanten Schmiermitteldruck.

Wird der Kolben 2.1 durch den Elektromagneten zur Druckseite geschoben bzw. fortbewegt bzw. vorwärts getrieben, erhöht sich der Druck des darin eingeschlossenen Schmiermittels, so dass das Rückschlagventil 2.4 öffnet und Schmiermittel in die Schmiermittelleitung 4 einströmt. Bei Deaktivieren des Elektromagneten drückt die Kolbendruckfeder den Kolben 2.1 zur Saugseite. Dadurch kann neues Volumen bzw. Schmiermittel nachströmen und nachfließen. Gleichzeitig vergrößert sich das saugseitige Volumen, wodurch Schmiermittel aus einem ebenfalls im Gehäuse 1 bzw. in der Einhausung oder im Montagetragblech bzw. im Einbaublech aufgenommenen Reservoir 6 bzw. Schmiermittelbehälter nachströmt.

Durch die Anzahl der Arbeitstakte des Kolbens 2.1 kann die von der Pumpe 2 geförderte Schmiermittelmenge sehr genau und exakt vorgegeben werden, da bei jedem Arbeitstakt das vom Kolben 2.1 verdrängte Volumen, das in einem möglichen Ausführungsbeispiel 60 mm³ betragen kann, in die Schmiermittelleitung 4 gefördert wird.

Von der Schmiermittelleitung 4 zweigen bzw. verteilen sich nach dem Druckanschluss der Pumpe 2 fünf parallele Zweige bzw. fünf parallele Zuleitungen 4.1 bis 4.5 zu je einer Schmierstelle 5.1 bis 5.5 ab. Dabei ist die erste Schmierstelle 5.1 einer rechten Stufenkette einer Fahrtreppe (nicht dargestellt) zugeordnet und weist hierzu bzw. dazu zwei Schmierpinsel bzw. Schmierausgänge auf, an denen die rechte Stufenkette bzw. Palettenkette vorbeistreift und dabei die aus den Schmierpinseln austretenden Schmiermittel bzw. Schmieröle aufnimmt. Die zweite Schmierstelle 5.2 ist einer linken Stufenkette der Fahrtreppe zugeordnet und weist in analoger Weise zwei Schmierpinsel auf, an denen die linke Stufenkette bzw. Palettenkette vorbeistreift. Die dritte und vierte Schmierstelle 5.3 und 5.4 ist einer rechten und linken Antriebskette der Fahrtreppe bzw. des Fahrsteiges zugeordnet und weist jeweils drei Schmieröffnungen auf, an denen die rechte bzw. linke Antriebskette vorbeistreift und dabei aus den Schmieröffnungen austretendes Schmiermittel bzw. synthetisches Schmieröl aufnimmt. Schließlich ist die fünfte Schmierstelle 5.5 einer Handlaufantriebskette zugeordnet und weist hierzu einen oder zwei Schmierpinsel auf, an dem die Handlaufantriebskette vorbeistreift und dabei austretendes Schmiermittel bzw. Schmieröl aufnimmt.

In jedem der fünf parallelen Zweige bzw. Zuleitungen 4.1 bis 4.5 ist ein elektrisch bzw. elektromagnetisch betätigtes Schaltventil 3.1 bis 3.5 für eine Ventilanordnung 3 angeordnet, welches im unaktuierten bzw. inaktiven Zustand den jeweiligen Zweig bzw. die jeweilige Zuleitung sperrt und bei Anlegen einer Steuerspannung öffnet. Die Ventile 3.1 bis 3.5 sind ebenfalls im Gehäuse 1 bzw. in der Einhausung bzw. auf dem Montagetragblech 1 bzw. auf dem Einbaublech 1 angeordnet und mit der Schmiermittelleitung 4 über je ein flexibles Kunststoffrohr oder einen flexiblen Kunststoffschlauch verbunden, die ihrerseits als flexibles Kunststoffrohr mit dem Druckanschluss der Pumpe 2 verbunden ist.

Zusätzlich ist in dem Gehäuse 1 bzw. Einhausung, welches spritzwassergekapselt und schlagfest ausgeführt ist, eine Steuereinrichtung (nicht dargestellt) angeordnet, welche die Pumpe 2 und die Ventilanordnung 3 ansteuert und ein untenerwähntes beschriebenes Schmierverfahren durchführt. Die Steuereinrichtung, die Pumpe 2 und die Ventilanordnung 3 weisen einen zugänglichen Anschluss zur Verbindung mit einer 12V bis/oder 24V-Spannungsquelle bzw. 110V Spannungsquelle auf. Weiter weist die Steuereinrichtung einen Anschluss zum Datenaustausch mit einer Steuerung der Fahrtreppe (nicht dargestellt) bzw. des Fahrsteiges (nicht dargestellt) auf.

Durch die Anordnung aller wesentlichen Komponenten in Gehäuse 1 bzw. in der Einhausung oder auf dem Montagetragblech bzw. auf dem Einbaublech kann das Schmiersystem weitgehend vormontiert werden. Vor Ort muss nur noch das Gehäuse 1 bzw. die Einhausung oder das Montagetragblech bzw. das Einbaublech an der Fahrtreppe befestigt, die Energieversorgungs- und die Datenaustauschanschlüsse mit einer Energiequelle bzw. mit der Steuerung der Fahrtreppe bzw. des Fahrsteiges verbunden und die druckseitigen Anschlüsse der Ventile 3.1 bis 3.5 mit den entsprechenden Schmierstellen 5.1 bis 5.5 verbunden werden. Hierzu werden die Ventile 3.1 bis 3.5 und die Schmierstellen 5.1 bis 5.5 mit flexiblen oder starren Fluidleitungen bzw. Schmiermittelleitungen verbunden.

Die Schmiermittelleitung bzw. Fluidleitung weist parallel zu den fünf Zweigen bzw. den fünf Zuleitungen 4.1 bis 4.5, die mit den jeweiligen Schmierstellen 5.1 bis 5.5 verbunden sind, einen sechsten Zweig bzw. Rückführung 4.6 auf, der die Druckseite der Pumpe 2 mit dem Reservoir 6 bzw. Schmiermittelbehälter verbindet und überschüssiges Schmiermittel in das Reservoir 6 zurückführt. In diesem sechsten Zweig bzw. in dieser Rückführung 4.6 ist ein Druckminderventil bzw. Druckminderungsventil 7 und ein Druckschalter 8 angeordnet, der mit der Steuereinheit des Schmiersystems verbunden ist und einen Druck des Schmiermittels in der Schmiermittelleitung 4 und dem sechsten Zweig bzw. Rückführung 4.6 erfasst.

Weiter ist im Reservoir bzw. im Schmiermittelbehälter 6 eine Heizvorrichtung in Form einer elektrischen Heizspirale 9 angeordnet, die ebenfalls mit der 12V bis/oder 24V bzw. 110V oder 220V bis 240V-Spannungsquelle verbunden und durch die Steuereinrichtung ein- und ausgeschaltet bzw. geregelt wird. Sofern das Schmiersystem bei kalten Betriebsbedingungen, beispielsweise bei einer Außenfahrtreppe bzw. bei einem Außenfahrsteig im Winter, gestartet werden soll, wird vor und während der Schmierung die Heizvorrichtung 9 aktiviert und so das Schmiermittel bzw. Schmieröl vorgewärmt, bevor es von der Pumpe 2 gefördert wird, um seine Viskosität und Schmierfähigkeit zu verbessern.

Bei Inbetriebnahme des Schmiersystems werden bzw. sind zunächst alle steuerbaren Ventile 3.1 bis 3.5 der Ventilanordnung 3 geschlossen und das Reservoir 6 mit Schmieröl befüllt. Anschließend wird die Pumpe 2 betrieben, bis der Druckschalter 8 einen Betriebsdruck erfasst, das Druckminderventil 7 öffnet erst bis in der Schmiermittelleitung 4 das Schmiermittel blasenfrei strömt, was durch ein Sichtfenster bzw. durch transparente Zuleitungen (nicht dargestellt) in der Schmiermittelleitung 4 kontrolliert werden kann. Um die Blasenfreiheit bzw. Entlüftung zu gewährleisten, werden noch 40-60 Arbeitstakte der Pumpe 2 durchgeführt, nachdem der Druckschalter 8 Betriebsdruck erfasst hat. Anschließend werden die Ventile 3.1 bis 3.5 nacheinander und einzeln geöffnet und die Pumpe 2 mit einer vorgegebenen bzw. voreingestellten Taktzahl betrieben, um auch die Zweige bzw. die Zuleitungen 4.1 bis 4.5 bis zu den Schmierstellen 5.1 bis 5.5 vollständig zu befüllen. Die Taktzahl wird rechnerisch oder empirisch so festgelegt, dass die einzelnen Zweige bzw. Zuleitungen sicher befüllt sind. Anschließend werden mehrere, vorzugsweise 3 bis 12 normale Schmierzyklen ausgeführt, um eine Erstschmierung der Fahrtreppe bzw. des Fahrsteiges durchzuführen.

In einem normalen Schmierzyklus wird zunächst geprüft, ob ein ausreichender Druckaufbau vorhanden ist. Hierzu wird bei geschlossenen Ventilen 3.1 bis 3.5 die Pumpe 2 betrieben und über den Druckschalter 8 der Schmiermitteldruck in der Schmiermittelleitung 4 erfasst. Erfasst der Druckschalter 8 keinen dem Betrieb der Pumpe entsprechenden Druckanstieg, so wird eine Fehlermeldung ausgegeben und das Schmiersystem stillgesetzt, da angenommen wird, dass die Pumpe 2 defekt ist oder/und, eines der Ventile 3.1 bis 3.5 bzw. 3.7 fehlerhaft bzw. nicht vollständig geschlossen ist oder die Schmiermittelleitung 4 undicht oder leck ist. Übersteigt beispielsweise nach 100 Arbeitstakten der Pumpe 2 der von dem Druckschalter 8 erfasste Druck einen bestimmten Grenzwert nicht, so wird ein fehlerhafter Druckaufbau erkannt. Wird hingegen ein ausreichender Druckaufbau erkannt, so werden zur Druckentlastung die Ventile 3.1 und 3.2 kurzzeitig geöffnet, so dass Schmiermittel durch den ersten und zweiten Zweig bzw. die Zuleitung 4.1 und 4.2 abfließen kann.

Anschließend wird nacheinander für jede in diesem Schmierzyklus zu schmierende Schmierstelle ein vorgegebenes Schmierprogramm bzw. Arbeitstaktprogramm durchgeführt. In einem Schmierzyklus müssen nicht notwendigerweise alle Schmierstellen geschmiert werden. Da jedoch die in einem Schmierzyklus an einer Schmierstelle abgegebene Schmiermittelmenge durch die Anzahl der Arbeitstakte der Kolbenpumpe 2 sehr genau und exakt vorgegeben werden kann, ist es vorteilhaft, bei jedem Schmierzyklus alle Schmierstellen mit einer ,wenn auch kleinen Schmiermittelmenge zu beschicken, die bis zum nächsten Schmierzyklus eine ausreichende Schmierung der jeweiligen Kette der Fahrtreppe bzw. des Fahrsteiges gewährleistet.

Zunächst wird das erste Ventil 3.1 geöffnet, während die übrigen Ventile 3.2 bis 3.5 bzw. 3.7 geschlossen bleiben. Anschließend wird die Pumpe 2 in Betrieb gesetzt und führt eine vorbestimmte bzw. vorgegebene Anzahl an Arbeitstakten aus. Dabei fördert sie eine durch die Taktzahl und das vom Kolben 2.1 verdrängte Volumen bestimmte Schmiermittelmenge durch den ersten Zweig bzw. die erste Zuleitung 4.1 zur ersten Schmierstelle 5.1, wo diese von der rechten Stufenkette (nicht dargestellt), beim Vorbeistreifen an den beiden Schmierpinseln bzw. Schmierausgängen der Schmierstelle, aufgenommen wird. Anschließend wird das Ventil 3.1 wieder geschlossen. Währenddessen wird am Druckschalter 8 geprüft, ob in der Schmiermittelleitung 4 oder dem sechsten Zweig 4.6 bzw. der Rückführung 4.6 ein Druck einen vorbestimmten Grenzwert übersteigt. Wird ein solcher grenzwertübersteigender Druck erfasst, wird angenommen, dass das Ventil 3.1 fehlerhaft nicht vollständig geöffnet hat, und es wird eine Fehlermeldung ausgegeben und das System stillgesetzt oder der betroffene Zweig des Schmiersystems.

Anschließend wird für die zweite bis fünfte Schmierstelle 5.2 bis 5.5 wie obenstehend für die erste Schmierstelle 5.1 beschrieben ein vorgegebenes Schmierprogramm durchgeführt. Dabei kann an jeder Schmierstelle eine individuelle und genau benötigte bzw. genau dosierbare Schmiermittelmenge abgegeben werden, indem die Pumpe 2 bei jeweils geöffnetem Ventil eine entsprechend, unterschiedliche Zahl an Arbeitstakten ausführt.

Vor jeder Inbetriebnahme der Pumpe 2 und/oder während ihres Betriebes kann die Füllhöhe im Reservoir bzw. Schmiermittelbehälter 6 durch einen Schwimmerschalter (nicht dargestellt) erfasst werden. Unterschreitet die Füllhöhe einen vorgegebenen Grenzwert bzw. Mindestfüllstand, wird die Pumpe gestoppt und das Schmiersystem stillgesetzt, um ein Leerhuben bzw. Leerlaufen der Pumpe 2 zu verhindern.

Die vorstehend beschriebene Inbetriebnahme, Erstschmierung und/oder ein vorstehend beschriebener normaler Schmierzyklus kann manuell, halbautomatisch oder zeitintervallgesteuert oder computergesteuert durchgeführt werden. Bei manueller Durchführung werden die Ventile 3.1 bis 3.5 der Ventilanordnung 3 sowie die jeweils geförderte Schmiermittelmenge bzw. die entsprechende Anzahl an Arbeitstakten der Pumpe 2 manuell vorgegeben. Bei halbautomatischer Durchführung werden die obenstehend beschriebenen Verfahrenschritte von der Steuereinheit des Schmiersystems durchgeführt, nachdem das Schmiersystem von außen aktiviert wurde. Wobei die Reihenfolge der Schmierstellen und die vorgesehene Schmiermittelmenge bzw. die entsprechende Anzahl an Arbeitstakten der Pumpe in einem Speicher der Steuereinrichtung fest vorgegeben ist. Bei computergesteuerter Durchführung wird die Steuereinheit des Schmiersystems von der Steuerung der Fahrtreppe bzw. des Fahrsteiges instruiert, eine Inbetriebnahme, eine Erstschmierung oder einen normalen Schmierzyklus durchzuführen, wobei in der Steuereinheit des Schmiersystems die Reihenfolge der Schmierstellen und die vorgegebene Schmiermittelmenge abgespeichert sind. Weiters von der Steuerung der Fahrtreppe entsprechend den Betriebsbedingungen, beispielsweise der Umlaufgeschwindigkeit bzw. Ablaufgeschwindigkeit der Ketten, vorgegeben werden kann. Umgekehrt kann die Steuereinheit des Schmiersystems Fehlermeldungen an die Steuerung der Fahrtreppe weitergeben, die die Steuerung ausweist bzw. anzeigt.

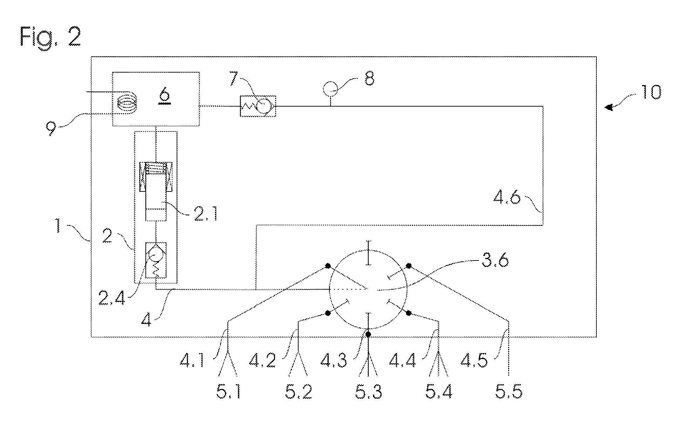

Fig. 2 zeigt ein Schmiersystem nach einer zweiten Ausführung der vorliegenden Erfindung. Mit der ersten Ausführung identische Elemente und Merkmale sind mit gleichen Bezugszeichen bezeichnet, so dass zu deren Erläuterung auf die vorstehenden oder obenstehenden Ausführungen verwiesen wird.

Das Schmiersystem nach der zweiten Ausführung entspricht in Aufbau und Funktion im Wesentlichen der obenstehend mit Bezug auf Fig. 1 beschriebenen ersten Ausführung. Im Gegensatz zu den einzelnen Schaltventilen 3.1 bis 3.5 bzw. 3.7 die jeweils in den Zweigen bzw. in den Zuleitungen 4.1 bis 4.5 der Schmiermittelleitung 4 angeordnet sind, ist die Ventilanordnung 3 in der zweiten Ausführung jedoch als ein Dreh-Umschaltventil 3.6 bzw. Dreh-Mehrwegventil 3.6 ausgebildet, das ein drehbares Element umfasst, welches je nach Winkelstellung bzw. Drehstellung einen der Zweige bzw. eine Zuleitung 4.1 bis 4.5 der Schmiermittelleitung 4 mit der Druckseite der Pumpe 2 verbindet oder bei geschlossenem Dreh-Ventil 3.6 alle Zweige bzw. alle Zuleitungen 4.1 bis 4.5 von der Kolbenpumpe 2 bzw. Pumpe 2 trennt.

An Stelle der sukzessiven bzw. nacheinander und getrennte Öffnung und Schließung der einzelnen Ventile 3.1 bis 3.5 in der ersten Ausführung wird das Dreh-Umschaltventil 3.6 durch die Steuereinheit des Schmiersystems elektromotorisch in eine erste bis sechste Stellung geschaltet, in der es den ersten, zweiten, dritten, vierten, fünften oder keinen der Zweige bzw. keine Zuleitung 4.1 bis 4.5 der Schmiermittelleitung 4 mit der Druckseite der Pumpe 2 verbindet. Die Funktion bzw. der Betrieb bzw. der Arbeitsablauf wird wie bei der ersten Ausführung durchgeführt und abgearbeitet. Soll also beispielsweise Schmiermittel zu der ersten Schmierstelle 5.1 gefördert werden, so wird das Dreh-Umschaltventil 3.6 in die in Fig. 2 dargestellte Stellung gebracht bzw. geschalten, in der die Zuleitung 4.1 mit der Druckseite der Kolbenpumpe 2 bzw. Pumpe 2 verbunden wird sowie die übrigen Zweige bzw. die übrigen Zuleitungen 4.2 bis 4.5 von der Pumpe 2 absperrt. Soll hingegen der Druckaufbau geprüft werden, wird das Dreh-Umschaltventil 3.6 durch Weiterschalten, beispielsweise um 60° im Uhrzeigersinn geschlossen. Dadurch kann und wird der Druckaufbau durch den Druckschalter 8 gemessen und geprüft.

## Patentansprüche

1. Schmiersystem (10) für eine Transporteinrichtung bzw. Fahrtreppe oder Fahrsteig, mit einer Pumpe (2) zur Abgabe einer vorgegebenen bzw. vorbestimmten Schmiermittelmenge pro Arbeitstakt;
einer Schmierstellenanordnung mit wenigstens einer Schmierstelle (5.1, 5.2, 5.3, 5.4, 5.5); und
einer Schmiermittelleitung (4) mit wenigstens einer Zuleitung (4.1, 4.2, 4.3, 4.4, 4.5), wobei je eine Zuleitung (4.1, 4.2, 4.3, 4.4, 4.5) der Schmiermittelleitung die Pumpe parallel mit einer Schmierstelle der Schmierstellenanordnung verbindet;
**dadurch gekennzeichnet, dass**
die Pumpe (2) eine Kolbenpumpe, insbesondere eine elektromagnetisch betätigte Kolbenpumpe ist; und dass
das Schmiersystem (10) weiter eine Ventilanordnung (3) umfasst, mit der jeder Zweig bzw. jede Zuleitung (4.1, 4.2, 4.3, 4.4, 4.5) der Schmiermittelleitung (4) wahlweise gesperrt oder mit der Pumpe (2) verbunden werden kann.

2. Schmiersystem nach Anspruch 1, **dadurch gekennzeichnet, dass** die Ventilanordnung (3) eine Mehrzahl von steuerbaren Ventilen (3.1,3.2,3.3.,3.4,3.5), insbesondere elektromagnetisch betätigte Ventile umfasst, wobei zwischen der Kolbenpumpe (2) und jeder Schmierstelle (5.1, 5.2, 5.3, 5.4, 5.5) der Schmierstellenanordnung je ein steuerbares Ventil (3.1, 3.2, 3.3., 3.4, 3.5) der Ventilanordnung (3) in dem Zweig bzw. in der Zuleitung (4.1, 4.2, 4.3, 4.4, 4.5) der Schmiermittelleitung (4) angeordnet ist.

3. Schmiersystem nach einem der vorhergehenden Ansprüche, **dadurch gekennzeichnet, dass** die Kolbenpumpe (2) und die Ventilanordnung (3) in einem gemeinsamen Gehäuse (1) bzw. Einhausung oder ein Montagetragblech bzw. ein Einbaublech aufgenommen sind.

4. Schmiersystem nach einem der vorhergehenden Ansprüche, **dadurch gekennzeichnet, dass** wenigstens eine Schmierstelle einer Stufenkette, einer Antriebskette und/oder einer Handlaufantriebskette der Transporteinrichtung zugeordnet ist.

5. Schmiersystem nach einem der vorhergehenden Ansprüche, **dadurch gekennzeichnet, dass** wenigstens eine Schmierstelle der Schmierstellenanordnung einen oder mehrere Schmierpinsel und/oder Schmieröffnungen umfasst.

6. Schmiersystem nach einem der vorhergehenden Ansprüche, **dadurch gekennzeichnet, dass** ein Zweig bzw. eine Rückführung (4.6) der Schmiermittelleitung (4) mit einer Druckseite bzw. Saugseite der Pumpe (2) kommuniziert.

7. Schmiersystem nach einem der vorhergehenden Ansprüche, **dadurch gekennzeichnet, dass** es weiter ein Schmiermittelreservoir (6) umfasst, das in Förderrichtung der Pumpe (2) zwischen der Ventilanordnung (3) angeordnet ist.

8. Schmiersystem nach Anspruch 7, **dadurch gekennzeichnet, dass** in dem Schmiermittelreservoir (6) eine Entlüftung und/oder ein Feuchtigkeitsabscheidung ausgebildet ist und/oder ein Schwimmschalter eingerichtet ist.

9. Schmiersystem nach einem der vorhergehenden Ansprüche, **dadurch gekennzeichnet, dass** eine Druckmessvorrichtung (8), insbesondere ein Druckschalter, in der Schmiermittelleitung angeordnet ist.

10. Schmiersystem nach einem der vorhergehenden Ansprüche, **dadurch gekennzeichnet, dass** in der Schmiermittelleitung (4) und/oder einem Schmiermittelreservoir (6) eine Heiz- und/oder Kühlvorrichtung (9) angeordnet ist.

11. Transporteinrichtung insbesondere Fahrtreppen bzw. Fahrsteige mit einem Schmiersystem (10) nach einem der vorhergehenden Ansprüche.

12. Verfahren zum Betrieb eines Schmiersystems (10) nach einem der vorhergehenden Ansprüche, wobei sukzessive für jede Schmierstelle ( n ) der Schmierstellenanordnung die Schritte
a) Verbinden der Pumpe (2) und der Schmierstelle (5.n) durch die Ventilanordnung (3);
b) Betreiben der Pumpe mit einer vorgegebenen Zahl von Arbeitstakten; und
c) Trennen der Pumpe (2) und der Schmierstelle (5.n) durch die Ventilanordnung (3) durchgeführt werden.

13. Verfahren nach Anspruch 12, wobei für wenigstens eine Schmierstelle ( n ) der Schmierstellenanordnung der Schritt
d) Prüfen, ob nach dem Verbinden der Pumpe (2) und der Schmierstelle (5.n) durch die Ventilanordnung (3) und dem Betreiben der Pumpe (2) der Druck in der Schmiermittelleitung (4) bzw. (4.6) ansteigt
durchgeführt wird.

14. Verfahren nach einem der Ansprüche 12 bis 13, wobei vor Verbinden der Pumpe (2) und der ersten Schmierstelle (5.n) durch die Ventilanordnung (3) die Schritte
e) Schließen der Ventilanordnung (3);
f) Betreiben der Pumpe (2) mit einer vorgegebenen Zahl von Arbeitstakten; und
g) Prüfen, ob der Druck in der Schmiermittelleitung (4) bzw. (4.6) ansteigt; durchgeführt wird.

15. Verfahren nach einem der Ansprüche 12 bis 14, wobei vor dem ersten Betreiben der Pumpe (2) der Schritt
h) Prüfen, ob ein ausreichender Schmiermittelvorrat im Reservoir (6) auf der Saugseite der Pumpe (2) vorhanden ist
durchgeführt wird.
